Europäisches Patentamt

(19) European Patent Office

Office européen des brevets

(11) Publication number: **0 440 583 A2**

# (12) EUROPEAN PATENT APPLICATION

(21) Application number: 91810056.1

(51) Int. Cl.⁵: **C08G 59/54**

(22) Date of filing: 25.01.91

(30) Priority: 02.02.90 US 474418

(43) Date of publication of application:
07.08.91 Bulletin 91/32

(84) Designated Contracting States:
CH DE FR GB IT LI

(71) Applicant: **CIBA-GEIGY AG**
**Klybeckstrasse 141**
**CH-4002 Basel (CH)**

(72) Inventor: **Helfand, David**
**3792 Wildwood Street**
**Yorktown Heights, N.Y. 10598 (US)**

(54) **Latent epoxy resin hardeners.**

(57)   The reaction products of polyallylnadic anhydride and various polyamines are latent hardeners for use in epoxy resins having more than one 1,2-epoxy groups per molecule. Mixtures of these products and epoxy resins are stable at room temperature for extended periods, yet cure quickly at elevated temperatures to yield products with high glass transition temperatures.

EP 0 440 583 A2

# LATENT EPOXY RESIN HARDENERS

The present application relates to latent hardeners obtained by the reaction of polyallylnadic anhydride and polyamines, to curable epoxy resin compositions comprising these hardeners and to products resulting from these compositions.

## Background of Invention

Amines and amine derivatives are extensively used as curing agents for epoxy resins. In such use, the amine compounds are combined with the epoxy resins by procedures well-known in the art. However in many instances it is desirable to provide a composition which is readily curable but which has sufficient shelf stability to permit admixture prior to use. It is, therefore, essential that the components, that is, the epoxy resin and the curing agent, be able to coexist for reasonable periods after admixture. Such curing agents are known. Many of the known curing agents which would provide effective and rapid curing at elevated temperatures are unsatisfactory since they fail to meet this requirement and tend to initiate gelation when incorporated into the epoxy resin.

A variety of such latent curing agents have been disclosed in the art. Amines, amine derivatives or substituted amines are frequently mentioned as suitable for this use. A number of these latent curing agents are listed in US-A 3,759,914. Latent curing agents prepared from acid anhydrides and linear aliphatic polyamines are disclosed, for example, in US-A 3,261,882, US-A 3,488,742, US-A 3,639,657 and US-A 3,639,657. Emphasis is placed on reaction products of phthalic anhydride and diethylenetriamine in these disclosures. The latent curing agents are utilized with a broad range of epoxy resins. The preparation of polyallylnadic anhydride is set forth in US-A 4,713,417.

It is the object of this invention to provide a novel class of latent curing agents with improved performance characteristics, such as a higher glass transition temperature ($T_g$).

It is a further object to provide high performance, one-component epoxy resin systems containing said latent curing agents.

## Summary of the Invention

In accordance with the present invention, it has been found that the reaction product of polyallylnadic anhydride and a polyamine such as diethylene triamine is a latent hardener which when combined with epoxy resins will provide compositions which are stable for long periods of time when stored at ambient temperatures while still providing, on curing for relatively short periods at elevated temperatures, for example 5-10 minutes at 100-150 °C, hardened products of satisfactory properties. It is particularly notable that the glass transition temperature of the hardened resin is relatively high.

These performance characteristics illustrate the benefits of the hardeners of the invention over the prior art. A present commercial product based on phthalic anhydride, although quite latent, has slow reactivity at 100 °C curing temperatures and gives a maximum glass transition temperature ($T_g$) of only 90 °C.

The anhydride utilized in the instant invention is polyallylnadic anhydride as taught in US-A 4,713,417 which is incorporated herein.

wherein n is 2-100.

The amines which are employed as reactants in the preparation of the novel latent hardeners of the present invention include ethylenediamine, triethylenetetramine, 1,6-diaminohexane, 1,3-diaminopropane, imino-bis(propylamine), methyl imino-bis(propylamine) and preferably diethylenetriamine.

In carrying out the preparation of the novel reaction products of the instant invention, it has been found advantageous to conduct the reaction in an excess of amine reactant. The particular quantity of excess employed can vary from slightly above equimolar proportions to a considerable excess. Obviously, however, practical considerations will govern the amount of excess employed since, for example, the upper limit employed will be dictated by the balancing of costs of materials against benefits derived. The reaction product is readily separated from the excess amine at the completion of the reaction by distilling off the remaining amine under reduced pressure.

In carrying out the reaction between the amine and anhydride, it has been found that temperatures between 50 °C and 160 °C can be employed. For optimum results, however, the reactants are heated to about 100 °C and maintained at this temperature during the reaction. The reaction is ordinarily carried out at atmospheric pressure. Reduced pressure can also be employed.

In order to achieve the objectives of the instant invention, it has been found that the reaction between the amine reactant and the anhydride reactant must be carried out in a nonaqueous medium. The most practical procedure has been found to consist of initially heating the amine reactant to the desired temperature and then adding anhydride incrementally.

The product of the reaction between 1 mol polyallylnadic anhydride and amine when incorporated into an epoxy resin composition provides a curable composition which is stable for at least two months at ambient temperature and pressure and which can thereafter be readily cured at temperatures as low as 100 °C. The novel hardener of this invention can be readily incorporated into epoxy resin compositions by known mixing techniques familiar to those working in the field. The cured products obtained upon heating the curable compositions containing the reaction products of the present invention exhibit very good properties.

The epoxy resin component of the curable composition is an epoxide compound containing $\chi$ epoxide groups per molecule calculated on the average molecular weight of the compound where $\chi$ is greater than 1. As epoxide compounds there may be used resins based on polyhydric phenols such as those based on bisphenol A, F and S ; glycidyl ethers of cresol novolacs and phenol novolacs ; hydantoin epoxide resins ; polyglycidyl esters ; glycidylated aromatic amines ; glycidylated aminophenols ; and certain cycloaliphatic epoxy resins. The diglycidyl ether of bisphenol A is a preferred epoxide for the purposes of the instant invention.

The ratio of hardener to epoxy resin can vary over a wide range. In general, the proportion of hardener to epoxy resin will range from about 5 parts of hardener per 100 parts of resin to about 75 parts of hardener per 100 parts of resin. In particular the range is 40-60 parts of hardener per 100 parts of resin.

The products of this invention are useful as curing agents for a wide variety of epoxy resins in various heat-cured applications. When combined with di- and polyepoxides, at generally stoichiometric amounts, and cured at elevated temperatures, a network of high crosslink density occurs. Accordingly, the expression "cure" as used herein, denotes the conversion of the above hardener and epoxide material into insoluble and infusible crosslinked products, with simultaneous shaping to give shaped articles such as castings, pressings or laminates, or to give two-dimensional structures such as coatings, enamels or adhesive bonds.

Such systems have frequently been used within the composites industry. A primary area of use has been in epoxy resins which are utilized to pre-impregnate various fibers for eventual use as honeycomb skins. These various laminates are utilized in composite construction and/or repair. The currently most widely used epoxy system for prepregging and laminating is based upon tetraglycidylated methylenedianiline and a diaminodiphenylsulfone hardener. Techniques for preparing prepregs are well known to those skilled in the art. In terms of honeycomb skins, graphite, glass, Kevlar reinforced skins as well as others, can be readily prepared from the instant systems. Correspondingly, techniques for preparing laminates are well. Such laminates may be prepared by compression or autoclave molding and may comprise a broad range of thickness.

The latent hardeners prepared according to the invention and admixed with polyepoxide compounds can furthermore be mixed, at any stage before cure, with usual modifiers such as extenders, fillers and reinforcing agents, pigments, dyestuffs, organic solvents, plasticizers, tackifiers, rubbers, accelerators, diluents and the like. As extenders, reinforcing agents, fillers and pigments which can be employed in the curable mixtures according to the invention there may be mentioned, for example : coal tar, bitumen, glass fibers, boron fibers, carbon fibers, cellulose, polyethylene powder, polypropylene powder, mica, asbestos, quartz powder, gypsum, antimony trioxide, bentones, silica aerogel ("aerosil"), lithopone, barite, titanium dioxide, carbon black, graphite, iron oxide, or metal powders, such as aluminum powder or iron powder. It is also possible to add other usual additives, for example, flameproofing agents, agents for conferring thixotropy, flow control agents, such as silicones, cellulose acetate butyrate, polyvinyl butyral, waxes, stearates and the like (which are in part also used as mold release agents) to the curable mixtures.

It is also possible in adhesive formulations, for example, to add rubbers such as carbonyl-terminated acrylonitrile-butadiene rubber, modifying resins such as triglycidyl p-aminophenol, accelerators, such as boron trifluoride monoethylamine complexes or imidazole complexes, and other additional hardeners such as dicyandiamide.

The curable mixtures can be manufactured in the usual manner with the aid of known mixing equipment (stirrers, kneaders, rollers and the like).

The following examples will serve to illustrate the invention. The parts referred to are parts by weight.

Example 1 : Preparation of the Latent Hardener

Diethylenetriamine (285 g) is charged to a reaction vessel and heated to 90 °C. The source of heat is then removed and a total of 185 g of polyallylnadic anhydride are added in 15 g increments. The addition of all of the anhydride takes about one-half hour. The reaction exotherm is held between 90 and 93 °C during the addition. When all the polyallylnadic anhydride has been added, the reaction mixture is brought to a temperature of 135 °C and held at this temperature for two and a quarter hours. At the end of this period unreacted diethylenetriamine and water equivalent to about 1 mole of water per equivalent of anhydride are removed by vacuum distillation under a pressure of 3 to 20 mm Hg. The head temperature at the completion of distillation is about 65 °C at 3 mm Hg and the final batch temperature is about 140 °C. The total weight of the distillate is 190 g. The vacuum is then broken and the viscous product is discharged hot. The product is recovered in a yield of 260 parts. It has an amino nitrogen content of 9.7% and 3.2% free diethylenetriamine.

Example 2 : Epoxy Resin Curing with Latent Hardener of Example 1

100 parts of a liquid diglycidyl ether of bisphenol A epoxy resin (epoxy content : 5.3 equivalents/kg) are combined with 50 parts of the hardener of Example 1 which has been ground to pass a 200 mesh screen. After intensive mixing, the blend is placed in a mold and cured at 100 °C for five minutes. The effect of post curing for four hours at various temperatures is given in Table 1.

Table 1

| 4 h Post Cure at: | $T_g$ - Expansion Mode TMA ( 1st heat-up)<br><br>Example 2  [°C] |
|---|---|
| 150 °C | 104 |
| 175 °C | 133 |
| 200 °C | 130 |

The hardener representative of the instant invention is seen to advantageously provide a high glass transition temperature.

Example 4 :

The reactivity of the latent hardener of Example 1 with respect to curing epoxy resin is indicated by measuring the Shore D hardness after curing for various times at 100 °C as shown in Table 2. The Shore D hardness is measured after the cured sample had been allowed to cool to room temperature for one hour.

Table 2

| Material | Shore D Hardness | | | | | |
|---|---|---|---|---|---|---|
| (min. at 100 °C) | 2.5 | 3.0 | 3.5 | 4.0 | 4.5 | 5.0 |
| Example 2 | Soft | 75 | 80 | 87 | | |

Example 5 : Room Temperature Stability

100 parts of a liquid diglycidyl ether of bisphenol A (epoxy content : 5.3 equivalents/kg) is mixed with the product of Example 1 and allowed to stand at room temperature for two months. No gelling is observed after this period of time which is indicative of the effective latency of the hardener of this invention.

**Claims**

1. A latent hardener obtained by the reaction of a polyallylnadic anhydride which contains the following repeating units

   or

wherein n is 2-100 with a polyamine selected from the group consisting of ethylene diamine, diethylene triamine, triethylene tetramine, 1,3-diaminopropane, 1,6-diaminohexane, imino-bis(propylamine) and methyl imino-bis(propylamine) at a temperature of from about 50 °C to about 160 °C.

2. A latent hardener according to claim 1 wherein the polyamine is diethylenetriamine.

3. A curable epoxy resin compositions comprising an epoxy resin having a 1,2-epoxy equivalency greater than 1 and a latent hardener obtained by reacting a polynadic anhydride with a polyamine selected from the group consisting of ethylene diamine, diethylene triamine, triethylene tetramine, 1,3-diaminopropane, 1,6-diaminohexane, iminobis(propyl amine) and methyl imino bis(propylamine) at a temperature of from about 50 °C to about 160 °C, the latent hardener being present in an amount of 5-75 parts of latent hardener per 100 parts of epoxy resin composition.

4. The composition of claim 3, wherein the polyamine is diethylenetriamine.

5. The product resulting from the heat curing of the composition of claim 3.